# EUROPÄISCHE PATENTSCHRIFT

(11) **EP 0 500 637 B1**
(45) Veröffentlichungstag und Bekanntmachung des Hinweises auf die Patenterteilung: **10.08.1994**
(21) Anmeldenummer: 90916469.1
(22) Anmeldetag: 08.11.1990
(51) Int. Cl.: C04B 28/02, C04B 24/08

(54) **WASSERABWEISENDER MÖRTEL**
WATER-REPELLENT MORTAR
MORTIER HYDROFUGE

(30) Priorität: 16.11.1989 DE 3938078
(43) Veröffentlichungstag der Anmeldung: 02.09.1992
(73) Patentinhaber: Henkel Kommanditgesellschaft auf Aktien, 40191 Düsseldorf (DE)
(72) Erfinder: BINEK, Martina, D-5758 Fröndenberg (DE); LAU, Jens-Jürgen, D-4750 Unna (DE); SATTLER, Hans-Peter, D-4708 Kamen (DE)
(86) Internationale Anmeldenummer: EP9001868
(87) Internationale Veröffentlichungsnummer: WO9107362

(56) Entgegenhaltungen:
- US-A- 2 857 287
- CHEMICAL ABSTRACTS, vol. 109, no. 22, November 1988, Columbus, Ohio, USA, L. MARTA et al (Inst. Politeh. Cluj-Napoca, Romia): "The effect of hydrofuge additives on the properties of cement", Master. Constr. 1988, 18(1), pages 35-37, Seite 375; ref. no. 196059N, s. Zusammenfassung
- CHEMICAL ABSTRACTS, vol. 103, no. 24, 16 Dezember 1985, Columbus, Ohio, USA & DD-A-221453 (VEB CHEMIEWERK GREIZ-DOELAU) 24-04-1985, Seite 265; ref. no. 200119C, siehe Zusammenfassung
- CHEMICAL ABSTRACTS, vol. 93, no. 14, 06 Oktober 1980, Columbus, Ohio, USA & JP-A-8032715 (SANYO CHEMICAL INDUSTRIES LTD) 07-03-1980, Seite 276; ref. no. 136925H, siehe Zusammenfassung
- CHEMICAL ABSTRACTS, vol. 106, no. 8, 23 Februar 1987, Columbus, Ohio, USA & JP-A-61219747 (SHIN-ETSU CHEMICAL INDUSTRY CO) 30-09-1986, Seite 306; ref. no. 54942J, siehe Zusammenfassung
- V.S. RAMACHANDRAN: "CONCRETE ADMIXTURES HANDBOOK - Properties, Science and Technology" 1984, NOYES PUBLICATIONS, Park Ridge, US, s. Seite 518, Absatz 9.4 - Seite 525
- CHEMICAL ABSTRACTS, vol. 96, no. 8, Columbus, Ohio, USA, JP-A-56129689 (MATSUSHITA ELECTRIC WORKS LTD) 09-10-1981, ref. no. 56966U, siehe Zusammenfassung

## Beschreibung

Die Erfindung betrifft einen wasserabweisenden Mörtel und seine Herstellung.

Es ist allgemein bekannt, die Eigenschaften von Mörtel durch Zusätze gezielt zu ändern. So ist es bekannt, Alkylarylsulfonate als Luftporenbildner zu verwenden und fettsaure Salze, wie Stearate oder Oleate als Mittel, um das Eindringen von Wasser zu verringern oder gar zu vermeiden. Die Wirkstoffe werden mit Trägerstoffen wie z.B. Gesteinsmehl unter anderem als pulverförmige Zusatzmittel dem Mörtel zugesetzt (s. Ullmanns Enzyklopädie, Band 8, Seite 317).

Ein Mörtel mit derartigen Komponenten ist in AT 379 139 beschrieben. Dort wird die Verwendung folgender Zusammensetzung als Entfeuchterputz vorgeschlagen: 1. als Bindemittel ein bestimmter Zement, 2. als Zuschlag ein Leichtzuschlagsstoff, vorzugsweise Perlite, 3. als Hydrophobiermittel Metallseife wie Calciumstearat, 4. als oberflächenaktive Substanz Fettalkoholsulfonate und 5. als Wasserretentionsmittel Methylcellulose. Damit soll verhindert werden, daß Salze aus dem Boden bzw. dem feuchten Mauerwerk in den Putz eindringen und Ausblühungen verursachen (s. Seite 2, Zeilen 6, 7, 16 und 17).

Die Salzausblühungen können aber auch noch andere Ursachen haben. In vielen Ländern, z.B. in Südeuropa und in den Küstenregionen Asiens, Afrikas und Lateinamerikas, werden zur Herstellung von Mörteln häufig Sande verwendet, die mit bauschädlichen Salzen, bei Seesand insbesondere Natriumchlorid, aber auch Natriumsulfat, kontaminiert sind. Die mit derartigen Sanden hergestellten Mörtel sind jedoch mit erheblichen Nachteilen behaftet, denn mit ihnen hergestellte Putze werden infolge des hohen Salzgehaltes bereits nach kurzer Zeit geschädigt, und zwar wegen eines sogenannten Kristallisations- bzw. Hydratationsdruckes der Salze auf ihre Umgebung. Erste Anzeichen für eine derartige Schädigung sind Salzausblühungen auf den Putzen.
Hier will die Erfindung auf einfache und kostengünstige Weise Abhilfe schaffen durch Mörtel, die den Schaden durch Salz verringern, egal ob es aus dem Boden, dem Mauerwerk oder dem Zuschlag kommt.

Die erfindungsgemäße Lösung ist den Ansprüchen zu entnehmen.

Die Erfindung beruht auf der Erkenntnis, daß durch die Verwendung eines Gemisches C) als Luftporenbildner für Mörtel auf Basis salzhaltiger Sande Mörtel- bzw. Putzmassen erhalten werden, die trotz ihres Gehaltes an zerstörerischen Salzen wie Natriumchlorid und/oder Natriumsulfat in einer Menge von 0,5, insbesondere 1,0 bis 5 Gew.-%, bezogen auf Quarzsand, eine hohe mechanische Stabilität und eine lange Lebensdauer bei geringer Neigung zur Durchfeuchtung aufweisen. Unter "wasserabweisend" wird eine verminderte kapillare Saugfähigkeit für flüssiges Wasser bei unverändert oder gar hoher Durchlässigkeit für Wasserdampf verstanden.
Das anorganische Bindemittel ist vorzugsweise Zement. Es können aber auch Kalk und Gips sowie deren Mischungen eingesetzt werden.

Gemäß einer vorteilhaften Ausführungsform der Erfindung ist der Zuschlag Quarzsand und weist eine Teilchengröße von höchstens 0 bis 2 mm auf.

Die Fettsäurekomponente der erfindungsgemäß zu verwendenden Metallseifen kann von natürlichen und/oder synthetischen Fettsäuren mit 12 bis 22 Kohlenstoffatomen gebildet sein; typische Beispiele für derartige Fettsäuren sind Laurin-, Myristin-, Palmitin-, Stearin-, Öl-, Behen- und Erucasäure. Diese Fettsäuren werden üblicherweise in Form ihrer technischen Gemische eingesetzt, wie sie aus natürlichen nachwachsenden Rohstoffen, z.B. tierischen und/oder pflanzlichen Fetten, erhältlich sind. Anstelle von oder zusammen mit den Metallseifen des Zinks, Aluminiums, Magnesiums und/oder Calciums können auch die entsprechenden Alkalisalze der genannten Fettsäuren, insbesondere Natrium- oder Kaliumsalze, eingesetzt werden, die mit den aus der Mörtelzusammensetzung stammenden Calciumionen zu den entsprechenden Calciumsalzen reagieren. Es können auch Mischungen eingesetzt werden.
Gemäß einer vorteilhaften Ausführungsform der Erfindung ist die Metallseife eine Calciumseife von Fettsäuren mit 16 bis 18 Kohlenstoffatomen aus der obigen Aufzählung der Fettsäuren.

Der feine Quarzsand (Zusatz b)) dient hauptsächlich als Füll- und Trägerstoff. Es kommen in Frage H 34 oder F 36, worunter Quarzsande bis 355 µm zu verstehen sind. Auch Quarzmehl-Typen sind möglich, z.B. W 3, worunter Quarzsande bis 250 µm zu verstehen ist. Selbst Kalksteinmehle sind brauchbar. Der Zusatz b) verliert an Bedeutung, wenn er nicht im Gemisch mit a) und b) zur Mörtelzubereitung verwendet wird.

Die erfindungsgemäß einsetzbaren anionischen Tenside sind als solche bekannt; typische Beispiele für geeignete Tenside sind in J. Falbe (Hrsg.), Surfactants in Consumer Products, Springer-Verlag, 1987, inbesondere Seite 54 bis 85, beschrieben, z.B. Alkylbenzolsulfonate, Fettalkoholsulfate, Alkylethersulfate, Alkansulfonate, Olefinsulfonate, alpha-Sulfofettsäureester, innere Sulfofettsäureester, Sulfobernsteinsäureester und Ethersulfonate. Es können auch Mischungen eingesetzt werden.

Gemäß einer weiteren vorteilhaften Ausführungsform der Erfindung verwendet man als anionisches Tensid das Natriumsalz eines Olefinsulfonats mit 12 bis 18 Kohlenstoffatomen. Es ist weiterhin bevorzugt, daß c) die anionischen Tenside in einer Menge von 3 bis 5 Gew.-%, bezogen auf das Gesamtgewicht von Metallseife und Quarzsand, zugesetzt werden.

Gemäß einer weiteren vorteilhaften Ausführungsform der Erfindung setzt man den Zusatz C) als Gemisch dem Mörtel in einer Menge im Bereich von 0,5 bis 2, insbesondere von 0,7 bis 1,5 Gew.-%, bezogen auf das Bindemittel des Mörtels, zu.

Die erfindungsgemäß zu verwendenden Gemische sind weiß bis gelblich und pulverförmig und können in leichter Weise den Mörtelmassen zudosiert werden, z.B. auf Baustellen.

Die Erfindung wird im folgenden anhand eines bevorzugten Ausführungsbeispiels und von Vergleichsversuchen näher erläutert.

Es wurde zunächst ein Zementmörtel aus einem Volumenteil Portland-Zement (Type PZ 35 F) und 3 Volumenteilen Rheinsand, Körnung 0 bis 2 mm, hergestellt. Ein Drittel dieser Mörtelmasse wurde als solche getestet. Dem zweiten Drittel der Mörtelmasse wurden jeweils 2,5 Gew.-%, bezogen auf Sand, Natriumchlorid und Natriumsulfat zugesetzt. Das restliche Drittel der Mörtelmasse wurde ebenfalls mit jeweils 2,5 Gew.-% Natriumchlorid und Natriumsulfat versetzt, erhielt jedoch zusätzlich noch ein Gemisch bestehend aus 61 Gew.-Teilen Quarzmehl (Siebanalyse: 0,3 % > 200 µm, 0,5 % > 160 µm, 1 % > 125 µm, 3 % > 100 µm, Rest < 100 µm), 35 Gew.-Teilen Calciumstearat und 4 Gew.-Teilen eines handelsüblichen Natriumsalzes eines C₁₄-C₁₆-Olefinsulfonates. Die vorstehend erwähnten Mörtelmassen werden in der angegebenen Reihenfolge als Mörtel I, Mörtel II und Mörtel III (Erfindung) bezeichnet.

Mit den Mörtelmassen wurden saugfähige Ziegelsteine beschichtet (Schichtdicke: 2 cm). Nach dem Aushärten (frühestens nach 7 Tagen) wurden die beschichteten Ziegel mit einem Drittel ihrer Länge in Wasser gestellt. Die Prüfung ergab die folgenden Ergebnisse:
Bei den mit den Mörteln I und II beschichteten Probenkörper war nach ca. 20 Minuten das Wasser an der Grenzfläche von Mörtel und Ziegel aufgestiegen. Nach ca. 2 Stunden waren Ziegel und Mörtel völlig durchfeuchtet. Die ersten Salzausblühungen zeigten sich nach ca. 48 Stunden bei dem Mörtel II. Nach ca. 2 Monaten hatte sich auf den Ziegeln bzw. dem Mörtel ein starker Algenbefall ausgebildet, wobei die Steinrückseite ebenfalls deutliche Algenbildung und Ausblühungen zeigte.

Dagegen zeigten sich bei dem Ziegel mit dem Mörtel III erst nach ca. 14 Tagen erste Ausblühungen an der Grenzfläche zwischen Ziegel und Mörtel; selbst nach 3 Monaten waren der Ziegel und der Mörtel noch nicht durchgefeuchtet. Die Steinrückseite war algen- und ausblühungsfrei.

Im folgenden werden weitere Prüfergebnisse der Mörtel I und III wiedergegeben:
1. Luftporengehalt des Frischmörtels:
   Er wurde nach DIN 18555, Teil 2, Punkt 5 (Ausgabe 1982) bestimmt. Der Mörtel wurde 4 Minuten bei 140 U/Min. gemischt und im Schockverfahren verdichtet.
   I 8 %
   III 24 bis 25 %
2. kapillare Wasseraufnahme (24 h, nach WTA-Merkblatt):
   Die kapillare Wasseraufnahme wurde nach dem WTA - Merkblatt 1-85 "Die bauphysikalischen und technischen Anforderungen an Sanierputz" -, Punkt 3.c, ermittelt. Die Probekörper waren nach der Herstellung zunächst 7 Tage im Klima 20/95 und anschließend 21 Tage im Normalklima 20/65 gelagert worden. Die an der Seitenfläche abgedichteten Proben wurden 24 Stunden lang mit der Saugfläche etwa 3 mm tief in ein Wasserbad von etwa 20 °C eingetaucht. Die mittlere Eindringtiefe an den Bruchflächen betrug:
   I = durchfeuchtet
   III = 2 bis 7 mm, Kern trocken
   Nach dem Merkblatt 1-85 darf der Feuchtigkeitsstrom die Proben nicht mehr als 7 mm und nicht weniger al 3 mm erfassen.
3. Wasserdampfdiffusion (g/m².d):
   Sie wurde bestimmt nach DIN 52615
   I = 6,7
   III = 20,47
4. Wasseraufnahmekoeffizient (kg/m².√t) nach 24 Stunden
   Er wurde nach DIN 52617 bestimmt.
   I = 0,43
   III = 0,16
5. Wasseraufnahme in 24 Stunden (kg/m²)
   I = 2,1
   III = 0,7
6. Sd-Wert (m) (Äquivalente Luftschichtdichte)
   Darunter ist die Dicke einer Luftschicht zu verstehen, die den gleichen Wasserdampf-Diffusionsdurchlaßwiderstand wie die Probe hat. Der Sd-Wert wurde nach DIN 52615 bestimmt.
   I = 2,99
   III = 0,977
7. Biegezug- und Druckfestigkeit
   Die Bestimmung der Biegezug- und der Druckfestigkeit wurde nach DIN 18555, Teile 3, Punkt 5 (Ausgabe September 1982) durchgeführt. Die hergestellten Prismen 4 x 4 x 16 cm wurden nach dem Schockverfahren nach Abschnitt 3.2.3 dieser Norm verdichtet.
   Druckfestigkeiten und Biegezugfestigkeiten der erfindungsgemäß Zusatz hergestellten Mörtelmassen lagen innerhalb der Normwerte.

Damit wurde gezeigt, daß die erfindungsgemäße Zusammensetzung trotz des Salzgehaltes von insgesamt 5 Gew.-%, bezogen auf den Sand bezüglich wichtiger Materialkenngrößen für einen Sanierputz günstiger sind als üblicher Mörtel.

## Patentansprüche

1. Wasserabweisender Mörtel, der folgende Komponenten enthält:
A) anorganisches Bindemittel,
B) salzhaltiger Zuschlag bis 4 mm Korngröße und
C) ein Zusatz mit den Komponenten:
a) eine Metallseife, ausgewählt aus der von Zink-, Aluminium-, Magnesium- und Calciumsalzen von Fettsäuren mit 12 bis 22 Kohlenstoffatomen sowie Alkalisalzen der vorgenannten Fettsäuren, die mit Calciumionen die entsprechenden Calciumsalze bilden, gebildeten Gruppe,
b) feinteiliger Quarzsand
und
c) ein anionisches Tensid,
wobei auf 20 bis 50 Gewichtsteile a) auf 40 bis 80 Gewichtsteile b) kommen und auf 100 Gewichtsteile a) + b) 5 bis 10 Gewichtsteile c).

2. Mörtel nach Anspruch 1, dadurch gekennzeichnet, daß der Zuschlag B) mindestens 0,5 g wasserlösliches Salz, inbesondere 1,0 g bis 5,0 pro 100 g Zuschlag enthält.

3. Mörtel nach Anspruch 1 oder 2, dadurch gekennzeichnet, daß die Metallseife a) eine Calciumseife von Fettsäuren mit 16 bis 18 Kohlenstoffatomen ist.

4. Mörtel nach mindestens einem der Ansprüche 1 bis 3, dadurch gekennzeichnet, daß der feinteilige Quarzsand b) eine Teilchengröße von höchstens 450, insbesondere von höchstens 200 µm aufweist.

5. Mörtel nach mindestens einem der Ansprüche 1 bis 4, dadurch gekennzeichnet, daß das anionische Tensid ein Natriumsalz eines Olefinsulfonats mit 12 bis 18 Kohlenstoffatomen ist.

6. Mörtel nach mindestens einem der Ansprüche 1 bis 5, dadurch gekennzeichnet, daß 3 bis 5 g anionisches Tensid c) auf zusammen 100 g Metallseife und Quarzsand kommen.

7. Mörtel nach mindestens einem der Ansprüche 1 bis 6, dadurch gekennzeichnet, daß auf 100 g Bindemittel A) 0,2 bis 2 g, insbesondere 0,7 bis 1,5 g des Zusatzes C) kommen.

8. Herstellung des Mörtels nach mindestens einem der Ansprüche 1 bis 7, dadurch gekennzeichnet, daß der Zusatz C) als Gemisch eingesetzt wird.

9. Mörtel-Zusatz gemäß Zusatz C) von Anspruch 1 und vorzugsweise mindestens einem der Ansprüche 3, 4, 5 oder 6 für Mörtel auf Basis salzhaltiger Sande.

## Claims

1. A water-repellent mortar containing the following components:
A) inorganic binder,
B) salt-containing aggregate, grain size up to 4 mm, and
C) an addition containing the following components:
a) a metal soap selected from the group consisting of zinc, aluminium, magnesium and calcium salts of C₁₂₋₂₂ fatty acids and alkali metal salts of these fatty acids which form the corresponding calcium salts with calcium ions,
b) fine quartz sand and
c) an anionic surfactant,
40 to 80 parts by weight b) being used to 20 to 50 parts by weight a) and 5 to 10 parts by weight c) being used to 100 parts by weight a) + b).

2. A mortar as claimed in claim 1, characterized in that the aggregate B) contains at least 0.5 g water-soluble salt, more particularly 1.0 g to 5.0 g, per 100 g aggregate.

3. A mortar as claimed in claim 1 or 2, characterized in that the metal soap a) is a calcium soap of C₁₆₋₁₈ fatty acids.

4. A mortar as claimed in at least one of claims 1 to 3, characterized in that the fine quartz sand b) has a particle size of at most 450 and, more particularly, at most 200 µm.

5. A mortar as claimed in at least one of claims 1 to 4, characterized in that the anionic surfactant is a sodium salt of a C₁₂₋₁₈ olefin sulfonate.

6. A mortar as claimed in any of claims 1 to 5, characterized in that 3 to 5 g anionic surfactant c) are used to a total of 100 g metal soap and quartz sand.

7. A mortar as claimed in at least one of claims 1 to 6, characterized in that 0.2 to 2 g and, more particularly, 0.7 to 1.5 g addition C) are used to 100 g binder A).

8. The production of the mortar claimed in at least one of claims 1 to 7, characterized in that the addition C) is used in the form of a mixture.

9. A mortar additive according to C of claim 1 and preferably at least one of claims 3, 4, 5 or 6 for mortars based on salt-containing sands.

## Revendications

1. Mortier hydrofuge qui contient les composants suivants :
A) un agent liant minéral
B) un supplément renfermant du sel ayant jusqu'à 4 mm de taille de grain et
C) un additif avec les composants :
a) un savon métallique choisi dans le groupe formé par les sels de zinc, d'aluminium, de magnésium et de calcium d'acides gras en C₁₂ - C₂₂ ainsi que par les sels de métal alcalin des acides gras précités qui forment avec des ions calcium, les sels de calcium correspondants.
b) du sable de quartz finement divisé et
c) un agent tensioactif anionique parmi lesquels résultent 20 à 50 parties en poids de a) pour 40 à 80 parties en poids de b) et pour 100 parties en poids de a) + b) 5 à 10 parties en poids de c).

2. Mortier selon la revendication 1, caractérisé en ce que le supplément B renferme au moins 0,5 g de sel hydrosoluble, en particulier de 1,0 g à 5,0 g pour 100 g de supplément.

3. Mortier selon la revendication 1 ou 2, caractérisé en ce que le savon métallique a) est un savon calcique d'acides gras ayant de 16 à 18 atomes de carbone.

4. Mortier selon au moins une des revendications 1 à 3, caractérisé en ce que le sable de quarts finement divisé b) possède une taille de particules au maximum de 450, en particulier au maximum de 200 µm.

5. Mortier selon au moins une des revendications 1 à 4, caractérisé en ce que l'agent tensioactif anionique est un sel de sodium d'un sulfate d'oléfine ayant de 12 à 18 atomes de carbone.

6. Mortier selon au moins une des revendications 1 à 5, caractérisé en ce que 3 à 5 g d'agent tensioactif anionique c) résultant ensemble, dans 100 g de savon métallique et de sable de quartz.

7. Mortier selon au moins une des revendications 1 à 6, caractérisé en ce que pour 100 g d'agent liant A, il résulte 0,2 à 2 g, en particulier 0,7 à 1,5 g de l'additif C).

8. Production du mortier selon au moins une des revendications 1 à 7, caractérisée en ce que l'additif C) est mis en oeuvre en tant que mélange.

9. Additif de mortier selon l'additif C) de la revendication 1, et de préférence selon au moins une des revendications 3, 4, 5 ou 6, pour des mortiers à base de sables renfermant des sels.
